(19) Europäisches Patentamt / European Patent Office / Office européen des brevets

(11) **EP 3 891 030 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(21) Anmeldenummer: **19813255.7**

(22) Anmeldetag: **25.11.2019**

(51) Internationale Patentklassifikation (IPC):
**B60T 13/74** *(2006.01)*      **F16D 63/00** *(2006.01)*
**B60T 8/88** *(2006.01)*      **B60T 13/66** *(2006.01)*

(52) Gemeinsame Patentklassifikation (CPC):
**B60T 13/748; B60T 8/171; F16D 63/002;**
B60T 2270/40; F16D 2121/20; F16D 2121/22

(86) Internationale Anmeldenummer:
**PCT/EP2019/082433**

(87) Internationale Veröffentlichungsnummer:
**WO 2020/114822 (11.06.2020 Gazette 2020/24)**

(54) **ELEKTROMAGNETISCHE VORRICHTUNG FÜR EIN BREMSSYSTEM FÜR EIN FAHRZEUG, VERFAHREN ZUM BETREIBEN EINER ELEKTROMAGNETISCHEN VORRICHTUNG FÜR EIN BREMSSYSTEM FÜR EIN FAHRZEUG UND BREMSSYSTEM FÜR EIN FAHRZEUG**

ELECTROMAGNETIC DEVICE FOR A BRAKING SYSTEM FOR A VEHICLE, METHOD FOR OPERATING AN ELECTROMAGNETIC DEVICE FOR A BRAKING SYSTEM FOR A VEHICLE, AND BRAKING SYSTEM FOR A VEHICLE

DISPOSITIF ÉLECTROMAGNÉTIQUE POUR SYSTÈME DE FREINAGE DE VÉHICULE, PROCÉDÉ POUR FAIRE FONCTIONNER UN DISPOSITIF ÉLECTROMAGNÉTIQUE POUR SYSTÈME DE FREINAGE DE VÉHICULE ET SYSTÈME DE FREINAGE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2018   DE 102018130614**

(43) Veröffentlichungstag der Anmeldung:
**13.10.2021   Patentblatt 2021/41**

(73) Patentinhaber: **KNORR-BREMSE Systeme für Nutzfahrzeuge GmbH**
**80809 München (DE)**

(72) Erfinder:
• **KAUFMANN, Christian**
  **71063 Sindelfingen (DE)**
• **BEYSE, Thorsten**
  **73265 Dettingen (DE)**
• **BÖER, Alfred**
  **74072 Heilbronn (DE)**
• **DAGTEKIN, Nusret**
  **71665 Vaihingen (DE)**
• **DANNHEIM, Christian**
  **75177 Pforzheim (DE)**
• **HERRMANN, Günter**
  **70569 Stuttgart (DE)**
• **KASAKYAN, Aykun**
  **89233 Neu-Ulm (DE)**
• **SCHOLL, Frank**
  **74379 Ingersheim (DE)**
• **DITTMAR, Christian**
  **70825 Korntal-Münchingen (DE)**
• **FEUCHT, Thomas**
  **71299 Wimsheim (DE)**

(56) Entgegenhaltungen:
DE-A1- 102008 058 865      DE-A1- 102013 006 605
JP-A- 2007 157 830      JP-A- 2014 224 571
US-A- 5 899 436      US-A1- 2016 265 609
US-B1- 6 412 613

EP 3 891 030 B1

**Beschreibung**

Die vorliegende Erfindung bezieht sich auf eine elektromagnetische Vorrichtung für ein Bremssystem für ein Fahrzeug, auf ein Verfahren zum Betreiben einer elektromagnetischen Vorrichtung für ein Bremssystem für ein Fahrzeug und auf ein Bremssystem für ein Fahrzeug.

Beim hochautomatisierten Fahren braucht ein Fahrer eines Fahrzeugs beispielsweise nicht permanent auf einem Fahrerplatz zu sitzen und für einen korrigierenden Eingriff zur Verfügung zu stehen. Daher können herkömmliche Rückfallebenen für kritische Situationen nicht zur Anwendung kommen. Falls ein primäres Bremssystem nicht zur Verfügung steht, sollte ein redundantes Bremssystem die Aufgabe des Fahrers übernehmen. Um diesbezüglich eine Redundanz abzubilden, können zusätzlich zu den Steuergeräten auch die Aktuatoren und Sensoren mitsamt ihrer Verkabelung redundant ausgeführt werden.

Die US 6 412 613 B1 offenbart eine elektrische Motorbremse mit einer gedruckten Schaltungsplatine, welche die nötige Verdrahtung umfasst, um eine Mehrzahl elektromagnetische Spulen zu verbinden und die Statoren dieser Spulen zu erden, wobei jede einzelne Spule fest an der ringförmigen Schaltungsplatine befestigt und elektrisch mit derselben verbunden ist. In der US 2016/0265609 A1 ist eine Getriebebremse gezeigt, die einen elektromechanischen Aktor mit zwei zueinander parallel verschobenen Magnetspulen nutzt, um eine Drehbewegung einer sich drehenden Komponente mit einer Mehrzahl von Zähnen zu verhindern. Die DE 10 2008 058 865 A1 offenbart einen Anbau einer Sicherheitsbremse, vorzugsweise einer elektromagnetisch lüftenden Federdruckbremse, mit einem Spulenträger, in den zwei Magnetspulen integriert sind.

Die JP 2007 157830 A bezieht sich auf ein Steuergerät für ein elektromagnetisches Ventil, welches eine Spule umfasst, die in der redundanten Struktur mit der gleichen Art von Spulen und eines dualen Systems gebildet ist. Die JP 2014 224571 A offenbart eine Magnetventilvorrichtung, die ein Magnetventil mit einer ersten Spule und einer zweiten Spule, die in Reihe zueinander geschaltet sind, und einen externen Schaltkreis zum Verbinden des Magnetventils mit einer Stromquelle umfasst.

Vor diesem Hintergrund ist es die Aufgabe der vorliegenden Erfindung, eine verbesserte elektromagnetische Vorrichtung für ein Bremssystem für ein Fahrzeug, ein verbessertes Verfahren zum Betreiben einer elektromagnetischen Vorrichtung für ein Bremssystem für ein Fahrzeug und ein verbessertes Bremssystem für ein Fahrzeug zu schaffen.

Diese Aufgabe wird durch eine elektromagnetische Vorrichtung für ein Bremssystem für ein Fahrzeug, durch ein Verfahren zum Betreiben einer elektromagnetischen Vorrichtung für ein Bremssystem für ein Fahrzeug, durch ein Bremssystem für ein Fahrzeug und durch ein entsprechendes Computerprogramm gemäß den Hauptansprüchen gelöst.

Gemäß Ausführungsformen können insbesondere für ein Fahrzeugbremssystem elektromagnetische Aktoren und Sensoren mit zumindest einer redundanten Spule ausgeführt werden, um eine sicherheitstechnische und zusätzlich oder alternativ spannungsebenenbezogene Redundanz bereitzustellen. Hierbei können beispielsweise um eine Magnetventilbuchse oder einen induktiven Sensor herum zumindest zwei Wicklungsanordnungen galvanisch getrennter elektrischer Leiter angeordnet sein oder werden. Somit kann im Falle eines Magnetventils insbesondere eine Kraft zum Steuern des Magnetventils galvanisch getrennt auf einen gemeinsamen Anker gebracht werden. Im Falle eines Sensors kann ein analoges Signal gleichermaßen auf beiden Wicklungsanordnungen zu Verfügung stehen, um ausgewertet zu werden. Vorteilhafterweise kann gemäß Ausführungsformen insbesondere Platz bzw. Bauraum eingespart werden, da beispielsweise Magnetventile und Sensoren des Bremssystems nicht doppelt ausgeführt zu werden brauchen. Ferner können dabei auch Kosten eingespart werden, da lediglich redundante Spulen anstelle redundanter Vorrichtungen vorzusehen sind. Somit können eine Betriebssicherheit des Bremssystems und zusätzlich oder alternativ eine Einsatzbandbreite bezogen auf unterschiedliche Ebenen elektrischer Spannung, die in dem Fahrzeug zum Einsatz kommen, erhöht werden. Zudem kann vermieden werden, dass Masseversätze, welche durch Leitungswiderstände von Zuleitungen und verschiedenen Stromabnahmen von an elektromagnetischen Vorrichtungen angeschlossenen Steuergeräten hervorgerufen werden können, zu Ausgleichsströmen führen, welche abzusichern wären.

Es wird eine elektromagnetische Vorrichtung für ein Bremssystem für ein Fahrzeug vorgestellt, wobei die elektromagnetische Vorrichtung folgende Merkmale aufweist:

einen Anker aus einem magnetisierbaren Material;

eine Buchse, wobei der Anker zumindest partiell innerhalb der Buchse aufnehmbar ist;

eine erste Wicklungsanordnung mit mindestens einer Windung eines elektrischen Leiters um die Buchse herum und mit zwei ersten elektrischen Anschlüssen; und

eine zweite Wicklungsanordnung mit mindestens einer Windung eines elektrischen Leiters um die Buchse herum und mit zwei zweiten elektrischen Anschlüssen, wobei die erste Wicklungsanordnung und die zweite Wicklungsanordnung galvanisch voneinander getrennt sind, wobei zwischen der ersten Wicklungsanordnung und dem Anker und zwischen der zweiten Wicklungsanordnung und dem Anker eine induktive Kopplung erzeugbar ist.

Bei dem Fahrzeug kann es sich um ein Nutzfahrzeug handeln, wie beispielsweise einen Lastkraftwagen oder dergleichen. Die elektromagnetische Vorrichtung kann auf einem elektromagnetischen Wirkprinzip, insbesondere einer induktiven Kopplung zwischen einem magnetisierbaren Material und einem von elektrischem Strom durchflossenen elektrischen Leiter beruhen. Das magnetisierbare Material kann ein ferromagnetisches Material sein. Die Buchse kann aus einem nichtmagnetisierbaren oder magnetisierbaren Material ausgeformt sein. Eine Anzahl von Windungen der ersten Wicklungsanordnung kann eine Anzahl von Windungen der zweiten Wicklungsanordnung entsprechen. Auch kann eine Abmessung des elektrischen Leiters der ersten Wicklungsanordnung einer Abmessung des elektrischen Leiters der zweiten Wicklungsanordnung entsprechen. Ferner kann ein Material des elektrischen Leiters der ersten Wicklungsanordnung einem Material des elektrischen Leiters der zweiten Wicklungsanordnung entsprechen. An die ersten elektrischen Anschlüsse der ersten Wicklungsanordnung kann ein erstes Steuergerät angeschlossen sein. An die zweiten elektrischen Anschlüsse der zweiten Wicklungsanordnung kann ein zweites Steuergerät angeschlossen sein. Die induktive Kopplung ist wahlweise zwischen der ersten Wicklungsanordnung und dem Anker und zusätzlich oder alternativ zwischen der zweiten Wicklungsanordnung und dem Anker erzeugbar.

Gemäß einer Ausführungsform kann die Vorrichtung als ein Aktor oder als ein Sensor für das Bremssystem ausgeführt sein. Insbesondere wenn die Vorrichtung als ein Aktor ausgeführt ist, kann der Anker relativ zu der Buchse translatorisch beweglich zumindest partiell innerhalb der Buchse aufnehmbar oder aufgenommen sein. Der Aktor kann ein Magnetventil des Bremssystems sein. Der Sensor kann ein Magnetfeldsensor oder dergleichen sein. Eine solche Ausführungsform bietet den Vorteil, dass sowohl Aktoren als auch Sensoren mit redundanter Spule betrieben werden können, um ein redundantes Bremssystem und zusätzlich oder alternativ eine redundante Funktionalität zu ermöglichen.

Auch kann die Vorrichtung eine dritte Wicklungsanordnung mit mindestens einer Windung eines elektrischen Leiters um die Buchse herum und mit zwei dritten elektrischen Anschlüssen und eine vierte Wicklungsanordnung mit mindestens einer Windung eines elektrischen Leiters um die Buchse herum und mit zwei vierten. elektrischen Anschlüssen aufweisen. Die dritte Wicklungsanordnung und die vierte Wicklungsanordnung können galvanisch voneinander und von der ersten Wicklungsanordnung und der zweiten Wicklungsanordnung getrennt sein. Zwischen der dritten Wicklungsanordnung und dem Anker und zwischen der vierten Wicklungsanordnung und dem Anker kann eine induktive Kopplung erzeugbar sein. Eine solche Ausführungsform bietet den Vorteil, dass ein ordnungsgemäßer Betrieb der elektromagnetischen Vorrichtung auf Basis von mehreren Ebenen einer elektrischen Spannung im Fahrzeug ermöglicht werden kann.

Ferner können die Wicklungsanordnungen elektrisch parallel und zusätzlich oder alternativ elektrisch in Reihe schaltbar oder geschaltet sein. Zwei Wicklungsanordnungen können beispielsweise elektrisch parallel geschaltet sein. Von vier Wicklungsanordnungen können beispielsweise jeweils zwei Wicklungsanordnungen elektrisch in Reihe geschaltet sein, um zwei Gruppen von Wicklungsanordnungen zu bilden, wobei diese beiden Gruppen elektrisch parallel geschaltet sein können. Eine solche Ausführungsform bietet den Vorteil, dass unterschiedliche Einsatzmöglichkeiten der elektromagnetischen Vorrichtung einfache und sichere Weise konfiguriert und ermöglicht werden können.

Zudem können zumindest zwei Anschlüsse unterschiedlicher Wicklungsanordnungen elektrisch miteinander verbunden sein. Eine elektrische Verbindung der zumindest zwei Anschlüsse der unterschiedlichen Wicklungsanordnungen kann mittels Bonden oder einer anderen Verbindungstechnik hergestellt sein oder werden. Eine solche Ausführungsform bietet den Vorteil, dass auf zuverlässige, unaufwändige und platzsparende Weise eine elektrische Reihenschaltung von Wicklungsanordnungen realisiert werden kann.

Auch können die elektrischen Anschlüsse ausgeformt sein, um durch zumindest einen Stecker einzeln oder gemeinsam kontaktierbar zu sein. Somit kann ein gemeinsamer Stecker oder können getrennte Stecker verwendet werden, um die elektrischen Anschlüsse aller Wicklungsanordnungen zu kontaktieren. Eine solche Ausführungsform bietet den Vorteil, dass die elektromagnetische Vorrichtung hinsichtlich eines externen Anschlusses derselben auf einfache Weise an unterschiedliche Einsatzumgebungen angepasst werden kann.

Es wird ferner ein Verfahren zum Betreiben einer elektromagnetischen Vorrichtung für ein Bremssystem für ein Fahrzeug vorgestellt, wobei die elektromagnetische Vorrichtung eine Ausführungsform der vorstehend genannten elektromagnetischen Vorrichtung ist, wobei das Verfahren folgenden Schritt aufweist:

Anlegen eines elektrischen Betätigungssignals an elektrische Anschlüsse zumindest einer der Wicklungsanordnungen, um den Anker relativ zu der Buchse translatorisch zu bewegen,
oder
Einlesen eines elektrischen Erfassungssignals von elektrischen Anschlüssen zumindest einer der Wicklungsanordnungen, um zu erfassen, ob eine translatorische Relativbewegung zwischen dem Anker und der Buchse oder eine Bewegung zwischen der Vorrichtung und einem Objekt auftritt.

Das Verfahren wird bzw. die Schritte des Verfahrens werden unter Verwendung zwei Steuergeräte ausgeführt werden. Gemäß einer Ausführungsform, bei der die elektromagnetische Vorrichtung als ein Aktor ausgeführt ist, kann das Verfahren den Schritt des Anlegens aufweisen. Gemäß einer anderen Ausführungsform, bei der die elektromagnetische Vorrichtung als ein Sensor ausgeführt ist, kann das Verfahren den Schritt des Einlesens aufweisen. Bei dem Objekt kann es sich um eine Komponente des Fahrzeugs handeln, deren Bewegung oder Lage erfasst werden soll. Beispielsweise kann das Objekt ein Polrad aufweisen. Polradzähne können sich an der Vorrichtung vorbei bewegen, wobei der Anker starr in der Buchse verbleiben kann.

Durch eine Änderung des magnetischen Widerstandes kann sich eine Magnetfeldänderung ergeben, die wiederum zu einer induzierten Spannung in den Wicklungsanordnungen führen kann.

Gemäß einer Ausführungsform kann im Schritt des Anlegens das Betätigungssignal in einem ersten Betriebsmodus des Bremssystems an elektrische Anschlüsse zumindest einer ersten der Wicklungsanordnungen und in einem zweiten Betriebsmodus des Bremssystems an elektrische Anschlüsse zumindest einer zweiten der Wicklungsanordnungen angelegt werden. Alternativ kann im Schritt des Einlesens das Erfassungssignal in einem ersten Betriebsmodus des Bremssystems von elektrischen Anschlüssen zumindest einer ersten der Wicklungsanordnungen und in einem zweiten Betriebsmodus des Bremssystems von elektrischen Anschlüssen zumindest einer zweiten der Wicklungsanordnungen eingelesen werden. Bei dem ersten Betriebsmodus kann es sich um einen störungsfreien Betriebsmodus oder einen Betriebsmodus auf einer ersten Ebene einer elektrischen Spannung handeln. Bei dem zweiten Betriebsmodus kann es sich um einen Betriebsmodus bei einer aufgetretenen Störung oder einen Betriebsmodus auf einer zweiten Ebene einer elektrischen Spannung handeln. Eine solche Ausführungsform bietet den Vorteil, dass auf einfache und platzsparende Weise eine Redundanz in dem Bremssystem hergestellt werden kann, wobei ein ausfallsicherer Betrieb und zusätzlich oder alternativ ein Betrieb mit mehreren elektrischen Spannungen berücksichtigt werden kann.

Der hier vorgestellte Ansatz schafft ferner zwei Steuergeräte, die ausgebildet sind, um die Schritte einer Variante eines hier vorgestellten Verfahrens in entsprechenden Einrichtungen durchzuführen, anzusteuern bzw. umzusetzen.

Hierzu können die Steuergeräte zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird zudem ein Bremssystem für ein Fahrzeug gemäß Anspruch 9 vorgestellt, wobei das Bremssystem folgende Merkmale aufweist:
zumindest ein Exemplar einer Ausführungsform der vorstehend genannten elektromagnetischen Vorrichtung; und
zwei Steuergeräte, die elektrisch mit Wicklungsanordnungen der zumindest einen elektromagnetischen Vorrichtung verbunden sind. Daher wird ein redundanter Betrieb des Bremssystems im Hinblick auf Ausfallsicherheit und zusätzlich oder alternativ im Hinblick auf mehrere Spannungsebenen ermöglicht.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes werden in der nachfolgenden Beschreibung mit Bezug zu den Figuren näher erläutert. Es zeigen:

Fig. 1 eine schematische Darstellung eines Fahrzeugs mit einem Bremssystem gemäß einem Ausführungsbeispiel;
Fig. 2 eine schematische Darstellung einer elektromagnetischen Vorrichtung gemäß einem Ausführungsbeispiel;
Fig. 3 eine schematische Darstellung einer elektromagnetischen Vorrichtung gemäß einem Ausführungsbeispiel; und
Fig. 4 ein Ablaufdiagramm eines Verfahrens zum Betreiben gemäß einem Ausführungsbeispiel.

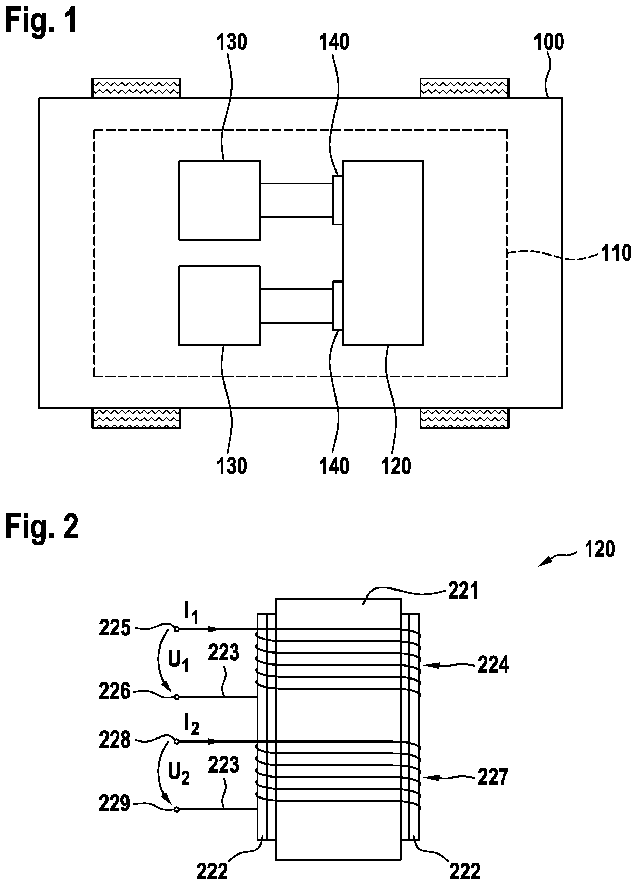

Fig. 1 zeigt eine schematische Darstellung eines Fahrzeugs 100 mit einem Bremssystem 110 gemäß einem Ausführungsbeispiel. Das Fahrzeug 100 ist ein Kraftfahrzeug, beispielsweise ein Nutzfahrzeug, insbesondere ein Lastkraftwagen oder dergleichen. Das Fahrzeug 100 weist das Bremssystem 110 auf. Von dem Bremssystem 110 sind in der Darstellung von Fig. 1 gemäß der Erfindung eine elektromagnetische Vorrichtung 120 und zwei Steuergeräte 130 gezeigt. Gemäß einem nicht erfindungsgemäß Ausführungsbeispiel kann das Bremssystem 110 in eine andere Kombination von Anzahlen von elektromagnetischen Vorrichtungen 120 und Steuergeräten 130 aufweisen.

Jedes der Steuergerät 130 ist elektrisch bzw. mittels elektrischer Leitungen mit der elektromagnetischen Vorrichtung 120 verbunden. Die elektromagnetische Vorrichtung 120 wird unter Bezugnahme auf nachfolgende Figuren noch detaillierter erläutert. Es sei an dieser Stelle lediglich angemerkt, dass die elektromagnetische Vorrichtung 120 zumindest zwei galvanisch voneinander getrennte elektrische Spulen bzw. Wicklungsanordnungen aufweist. Ein erstes der Steuergeräte 130 ist elektrisch mit einer ersten der Wicklungsanordnungen der elektromagnetischen Vorrichtung 120 verbunden. Ein zweites der Steuergeräte 130 ist elektrisch mit einer zweiten der Wicklungsanordnungen der elektromagnetischen Vorrichtung 120 verbunden.

Gemäß dem in Fig. 1 dargestellten Ausführungsbeispiel ist jedes der Steuergeräte 130 über einen eigenen Stecker 140 elektrisch mit der elektromagnetischen Vorrichtung 120 bzw. jeweils einer der Wicklungsanordnungen der elektromagnetischen Vorrichtung 120 verbunden.

Gemäß einem Ausführungsbeispiel ist das erste der Steuergeräte 130 ausgebildet, um einen Normalbetrieb des Bremssystems 110 und/oder der elektromagnetischen Vorrichtung 120 zu steuern. Hierbei ist das zweite der Steuergeräte 130 ausgebildet, um einen für Redundanz vorgesehenen Hilfsbetrieb des Bremssystems 110 und/oder der elektromagnetischen Vorrichtung 120 zu steuern. Gemäß einem anderen Ausführungsbeispiel ist das erste der Steuergeräte 130 ausgebildet, um die elektromagnetische Vorrichtung 120 unter Verwendung elektrischer Signale mit einer ersten Spannungsebene anzusteuern. Hierbei ist das zweite der Steuergeräte 130 ausgebildet, um die elektromagnetische Vorrichtung 120 unter Verwendung elektrischer Signale mit einer zweiten Spannungsebene anzusteuern. Die Spannungsebenen unterscheiden sich voneinander.

Die elektromagnetische Vorrichtung 120 ist gemäß einem Ausführungsbeispiel als ein Aktor ausgeführt, beispielsweise als ein Magnetventil. Hierbei sind zwischen der elektromagnetischen Vorrichtung 120 und zumindest einem der Steuergeräte 130 elektrische Betätigungssignale übertragbar. Gemäß einem anderen Ausführungsbeispiel ist die elektromagnetische Vorrichtung 120 als ein Sensor ausgeführt. Dabei sind zwischen der elektromagnetischen Vorrichtung 120 und zumindest einem der Steuergeräte 130 elektrische Erfassungssignale übertragbar.

**Fig. 2** zeigt eine schematische Darstellung einer elektromagnetischen Vorrichtung 120 gemäß einem Ausführungsbeispiel. Die elektromagnetische Vorrichtung 120 entspricht oder ähnelt der elektromagnetischen Vorrichtung aus Fig. 1. Die elektromagnetische Vorrichtung 120 weist einen Anker 221, eine Buchse 222, elektrisch leitfähigen Draht 223, eine erste Wicklungsanordnung 224 mit zwei ersten elektrischen Anschlüssen 225 und 226 und eine zweite Wicklungsanordnung 227 mit zwei zweiten elektrischen Anschlüssen 228 und 229 auf.

Der Anker 221 ist aus einem magnetisierbaren Material ausgeformt. Genauer gesagt ist der Anker 221 beispielsweise aus einem ferromagnetischen Material ausgeformt. Der Anker 221 weist eine längliche Form, beispielsweise eine zylindrische Form auf. Der Anker 221 ist zumindest teilweise innerhalb der Buchse 222 aufgenommen angeordnet. Anders ausgedrückt ist die Buchse 222 ausgeformt, um zumindest einen Teilabschnitt des Ankers 221 zu umschließen. Der Anker 221 ist relativ zu der Buchse 222 starr oder translatorisch beweglich bzw. bewegbar angeordnet. Die Buchse 222 ist beispielsweise aus einem nichtmagnetisierbaren Material ausgeformt.

Die erste Wicklungsanordnung 224 weist mindestens eine Windung, typischerweise eine Vielzahl von Windungen, eines aus dem elektrisch leitfähigen Draht 223 ausgeformten elektrischen Leiters um die Buchse 222 herum auf. Ferner weist die erste Wicklungsanordnung 224 einen ersten elektrischen Eingangsanschluss 225 und einen ersten elektrischen Ausgangsanschluss 226 auf. Die ersten elektrischen Anschlüsse 225 und 226 repräsentieren hierbei Enden des elektrischen Leiters bzw. des für den elektrischen Leiter der ersten Wicklungsanordnung 224 verwendeten elektrisch leitfähigen Drahtes 223. Die zweite Wicklungsanordnung 227 weist mindestens eine Windung, typischerweise eine Vielzahl von Windungen, eines aus dem elektrisch leitfähigen Draht 223 ausgeformten elektrischen Leiters um die Buchse 222 herum auf. Zudem weist die zweite Wicklungsanordnung 227 einen zweiten elektrischen Eingangsanschluss 228 und einen zweiten elektrischen Ausgangsanschluss 229 auf. Die zweiten elektrischen Anschlüsse 228 und 229 repräsentieren hierbei Enden des elektrischen Leiters bzw. des für den elektrischen Leiter der zweiten Wicklungsanordnung 227 verwendeten elektrisch leitfähigen Drahtes 223.

In dem elektrischen Leiter der ersten Wicklungsanordnung 224 kann ein erster elektrischer Strom $I_1$ geführt werden. Zwischen dem ersten elektrischen Eingangsanschluss 225 und dem ersten elektrischen Ausgangsanschluss 226 kann eine erste elektrische Spannung $U_1$ anliegen bzw. abfallen. In dem elektrischen Leiter der zweiten Wicklungsanordnung 227 kann ein zweiter elektrischer Strom $I_2$ geführt werden. Zwischen dem zweiten elektrischen Eingangsanschluss 228 und dem zweiten elektrischen Ausgangsanschluss 229 kann eine zweite elektrische Spannung $U_2$ anliegen bzw. abfallen.

Die erste Wicklungsanordnung 224 und die zweite Wicklungsanordnung 227 sind um die Buchse 222 herum angeordnet. Die erste Wicklungsanordnung 224 repräsentiert eine erste elektrische Spule und die zweite Wicklungsanordnung 227 repräsentiert eine zweite elektrische Spule. Die erste Wicklungsanordnung 224 und die zweite Wicklungsanordnung 227 sind galvanisch voneinander getrennt. Die erste Wicklungsanordnung 224 und die zweite Wicklungsanordnung 227 sind bezüglich einander elektrisch parallel geschaltet. Somit ist zwischen der ersten Wicklungsanordnung 224 und dem Anker 221 eine induktive Kopplung erzeugbar. Tritt beispielsweise eine translatorische Relativbewegung zwischen dem Anker 221 und der Buchse 222 mit der ersten Wicklungsanordnung 224 oder eine Bewegung eines Objekts relativ zu der Vorrichtung 120 auf, fließt der erste elektrische Strom $I_1$ in dem elektrischen Leiter der ersten Wicklungsanordnung 224. Zwischen der zweiten Wicklungsanordnung 227 und dem Anker 221 ist eine induktive Kopplung erzeugbar. Tritt beispielsweise eine translatorische Relativbewegung zwischen dem Anker 221 und der Buchse 222 mit der zweiten Wicklungsanordnung 227 oder eine Bewegung eines Objekts relativ zu der Vorrichtung 120 auf, fließt der zweite elektrische Strom $I_2$ in dem elektrischen Leiter der zweiten Wicklungsanordnung 227.

Hierbei sind der erste elektrische Eingangsanschluss 225 und der erste elektrische Ausgangsanschluss 226 einerseits sowie der zweite elektrische Eingangsanschluss 228 und der zweite elektrische Ausgangsanschluss 229 durch einzelne bzw. getrennte Stecker oder durch einen gemeinsamen Stecker elektrisch kontaktierbar. So ist beispielsweise eine elektrische Verbindung der Wicklungsanordnungen 224 und 227 mit zumindest einem Steuergerät des Bremssystems herstellbar.

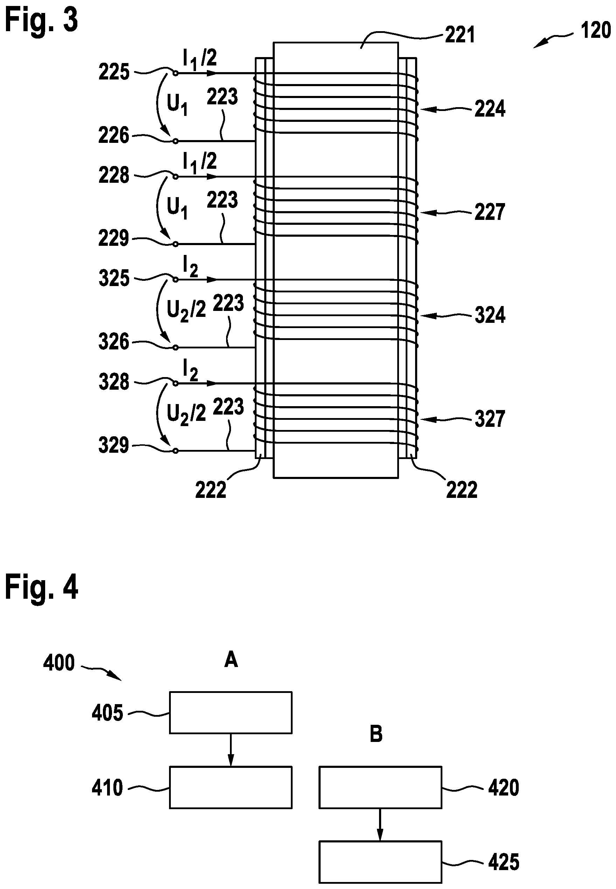

**Fig. 3** zeigt eine schematische Darstellung einer elektromagnetischen Vorrichtung 120 gemäß einem Ausführungsbeispiel. Die elektromagnetische Vorrichtung 120 entspricht hierbei der elektromagnetischen Vorrichtung aus Fig. 2 mit Ausnahme dessen, dass zusätzlich eine dritte Wicklungsanordnung 324 und eine vierte Wicklungsanordnung 327 vorgesehen sind und eine Verschaltung der Wicklungsanordnungen 224, 227, 324 und 327 modifiziert ist.

Die dritte Wicklungsanordnung 324 weist mindestens eine Windung, typischerweise eine Vielzahl von Windungen, eines aus dem elektrisch leitfähigen Draht 223 ausgeformten elektrischen Leiters um die Buchse 222 herum auf. Ferner weist die dritte Wicklungsanordnung 324 einen dritten elektrischen Eingangsanschluss 325 und einen dritten elektrischen Ausgangsanschluss 326 auf. Die dritten elektrischen Anschlüsse 325 und 326 repräsentieren hierbei Enden des elektrischen Leiters bzw. des für den elektrischen Leiter der dritten Wicklungsanordnung 324 verwendeten elektrisch leitfähigen Drahtes 223. Die vierte Wicklungsanordnung 327 weist mindestens eine Windung, typischerweise eine Vielzahl von Windungen, eines aus dem elektrisch leitfähigen Draht 223 ausgeformten elektrischen Leiters um die Buchse 222 herum auf. Zudem weist die vierte Wicklungsanordnung 327 einen vierten elektrischen Eingangsanschluss 328 und einen vierten elektrischen Ausgangsanschluss 329 auf. Die vierten elektrischen Anschlüsse 328 und 329 repräsentieren hierbei Enden des elektrischen Leiters bzw. des für den elektrischen Leiter der vierten Wicklungsanordnung 327 verwendeten elektrisch leitfähigen Drahtes 223.

Die dritte Wicklungsanordnung 324 und die vierte Wicklungsanordnung 327 sind um die Buchse 222 herum angeordnet. Die dritte Wicklungsanordnung 324 repräsentiert eine dritte elektrische Spule und die vierte Wicklungsanordnung 327 repräsentiert eine vierte elektrische Spule. Die dritte Wicklungsanordnung 324 und die vierte Wicklungsanordnung 327 sind galvanisch voneinander getrennt.

Gemäß dem in Fig. 3 dargestellten Ausführungsbeispiel sind die erste Wicklungsanordnung 224 und die zweite Wicklungsanordnung 227 bezüglich einander elektrisch in Reihe geschaltet. Hierbei kann der erste elektrische Ausgangsanschluss 226 elektrisch mit dem zweiten elektrischen Eingangsanschluss 228 verbunden sein. Die dritte Wicklungsanordnung 324 und die vierte Wicklungsanordnung 327 sind bezüglich einander elektrisch in Reihe geschaltet. Dazu kann der dritte elektrische Ausgangsanschluss 326 elektrisch mit dem vierten elektrischen Eingangsanschluss 328 verbunden sein. Die erste Wicklungsanordnung 224 und die zweite Wicklungsanordnung 227 sind elektrisch parallel zu der dritten Wicklungsanordnung 324 und der vierten Wicklungsanordnung 327 geschaltet.

In dem elektrischen Leiter der ersten Wicklungsanordnung 224 und in dem elektrischen Leiter der zweiten Wicklungsanordnung 227 kann jeweils die Hälfte eines ersten elektrischen Stroms $I_1$ geführt werden. Zwischen dem ersten elektrischen Eingangsanschluss 225 und dem ersten elektrischen Ausgangsanschluss 226 sowie zwischen dem zweiten elektrischen Eingangsanschluss 228 und dem zweiten elektrischen Ausgangsanschluss 229 kann eine erste elektrische Spannung $U_1$ anliegen bzw. abfallen. Somit ist zwischen der ersten Wicklungsanordnung 224 sowie der zweiten Wicklungsanordnung 227 und dem Anker 221 eine induktive Kopplung erzeugbar. Tritt beispielsweise eine translatorische Relativbewegung zwischen dem Anker 221 und der Buchse 222 mit der ersten Wicklungsanordnung 224 und der zweiten Wicklungsanordnung 227 oder eine Bewegung zwischen einem Objekt und der Vorrichtung 120 auf, fließt der erste elektrische Strom $I_1$ in dem elektrischen Leiter der ersten Wicklungsanordnung 224 und der zweiten Wicklungsanordnung 227.

In dem elektrischen Leiter der dritten Wicklungsanordnung 324 und in dem elektrischen Leiter der vierten Wicklungsanordnung 327 kann ein zweiter elektrischer Strom $I_2$ geführt werden. Zwischen dem dritten elektrischen Eingangsanschluss 325 und dem dritten elektrischen Ausgangsanschluss 326 sowie zwischen dem vierten elektrischen Eingangsanschluss 328 und dem vierten elektrischen Ausgangsanschluss 329 kann jeweils die Hälfte einer zweiten elektrischen Spannung $U_2$ anliegen bzw. abfallen. Somit ist zwischen der dritten Wicklungsanordnung 324 sowie der vierten Wicklungsanordnung 327 und dem Anker 221 eine induktive Kopplung erzeugbar. Tritt beispielsweise eine translatorische Relativbewegung zwischen dem Anker 221 und der Buchse 222 mit der dritten Wicklungsanordnung 324 und der vierten Wicklungsanordnung 327 oder eine Bewegung zwischen einem Objekt und der Vorrichtung 120 auf, fließt der zweite elektrische Strom $I_2$ in dem elektrischen Leiter der dritten Wicklungsanordnung 324 und der vierten Wicklungsanordnung 327.

Anders ausgedrückt ist es mittels der elektromagnetischen Vorrichtung 120 gemäß dem in Fig. 3 dargestellten Ausführungsbeispiel möglich, im Fahrzeug verschiedene Spannungsebenen mit dem Redundanzkonzept in Einklang zu bringen. Dazu können beispielsweise vier Wicklungsanordnungen 224, 227, 324 und 327 vorgesehen werden. Bei geeigneter Auslegung der Wicklungsanordnungen 224, 227, 324 und 327 kann durch internes Bonden einer elektrischen Reihenschaltung oder Parallelschaltung beispielsweise ein Magnetventil für einen Betrieb bei 12 Volt oder 24 Volt realisiert werden. Es sind auch Spannungsebenenkombinationen von 24 Volt und 48 Volt denkbar.

Hinsichtlich der Wicklungsanordnungen 224 und 227 bzw. optional zusätzlich 324 und 327 der elektromagnetischen Vorrichtung 120 aus Fig. 2 bzw. Fig. 3 lassen sich die folgenden Feststellungen treffen.

Die Widerstände ergeben sich zu:

$$R_1 + R_1 = 2R_1 = R_{\text{Serie}}$$

$$\frac{R_1 \cdot R_1}{R_1 + R_1} = \frac{R_1}{2} = R_{\text{Parallel}}$$

Statisch sind die Ströme dann:

$$I = \frac{U}{R}$$

$$I(U_1) = \frac{U_1}{R_{\text{Serie}}} = \frac{U_1}{2R_1}$$

$$I\left(\frac{U_1}{2}\right) = \frac{\frac{U_1}{2}}{R_{\text{Parallel}}} = \frac{\frac{U_1}{2}}{\frac{R_1}{2}} = \frac{U_1}{R_1}$$

Für das Magnetfeld bedeutet das:

$$B = \frac{\mu}{2\pi r} NI = \frac{\mu}{2\pi r} N(U_1)I(U_1) = \frac{\mu}{2\pi r} N\left(\frac{U_1}{2}\right) I\left(\frac{U_1}{2}\right)$$

wenn

$$N(U_1) = 2N\left(\frac{U_1}{2}\right)$$

Da die Kraft proportional zu dem Magnetfeld ist, ergibt sich die Schlussfolgerung, dass durch Reihen- bzw. Parallelschalten zweier gleicher Wicklungsanordnungen die Nutzspannung eine beliebige Spannung und deren Hälfte sein kann.

**Fig. 4** zeigt ein Ablaufdiagramm eines Verfahrens 400 zum Betreiben gemäß einem Ausführungsbeispiel. Das Verfahren 400 ist ausführbar, um eine elektromagnetische Vorrichtung für ein Bremssystem für ein Fahrzeug zu betreiben bzw. einen Betrieb derselben zu steuern. Hierbei entspricht oder ähnelt das Bremssystem dem Bremssystem aus Fig. 1. In einer ersten Variante A des Verfahrens 400 zum Betreiben ist die elektromagnetische Vorrichtung als ein Aktor des Bremssystems ausgeführt, beispielsweise als ein Magnetventil. In einer zweiten Variante B des Verfahrens 400 zum Betreiben ist die elektromagnetische Vorrichtung als ein Sensor des Bremssystems ausgeführt.

In der ersten Variante A weist das Verfahren 400 zum Betreiben einen Schritt 410 des Anlegens eines elektrischen Betätigungssignals an elektrische Anschlüsse zumindest einer der Wicklungsanordnungen auf, um den Anker relativ zu der Buchse translatorisch zu bewegen. Optional weist das Verfahren 400 zum Betreiben in der ersten Variante A vor dem Schritt 410 des Anlegens auch einen Schritt 405 des Empfangens eines Anforderungssignals auf. Das Anforderungssignal repräsentiert hierbei eine angeforderte Betätigung der elektromagnetischen Vorrichtung, bei der eine translatorische Bewegung des Ankers relativ zu der Buchse erfolgt. Gemäß einem Ausführungsbeispiel wird im Schritt 410 des Anlegens das Betätigungssignal in einem ersten Betriebsmodus des Bremssystems an elektrische Anschlüsse zumindest einer ersten der Wicklungsanordnungen und in einem zweiten Betriebsmodus des Bremssystems an elektrische Anschlüsse zumindest einer zweiten der Wicklungsanordnungen angelegt. Unter Betriebsmodus sind ein Normalbetrieb oder ein Hilfsbetrieb bzw. alternativ ein Betrieb auf einer ersten elektrischen Spannungsebene oder ein Betrieb auf einer zweiten elektrischen Spannungsebene zu verstehen. In dem ersten Betriebsmodus kann das erste Steuergerät zum Ansteuern der elektromagnetischen Vorrichtung verwendet werden, wobei in dem zweiten Betriebsmodus das zweite Steuergerät zum Ansteuern der elektromagnetischen Vorrichtung verwendet werden kann.

In der zweiten Variante B weist das Verfahren 400 zum Betreiben einen Schritt 420 des Einlesens eines elektrischen Erfassungssignals von elektrischen Anschlüssen zumindest einer der Wicklungsanordnungen auf, um zu erfassen, ob eine translatorische Relativbewegung zwischen dem Anker und der Buchse oder eine Bewegung zwischen der Vorrichtung und einem Objekt, wobei der Anker relativ zu der Buchse starr angeordnet ist, auftritt. Optional weist das Verfahren 400 zum Betreiben in der zweiten Variante B nach dem Schritt 420 des Einlesens einen Schritt 425 des Auswertens des eingelesenen Erfassungssignals auf. Gemäß einem Ausführungsbeispiel wird im Schritt 420 des Einlesens das Erfassungssignal in dem ersten Betriebsmodus des Bremssystems von elektrischen Anschlüssen zumindest einer ersten der Wicklungsanordnungen und in dem zweiten Betriebsmodus des Bremssystems von elektrischen Anschlüssen zumindest einer zweiten der Wicklungsanordnungen eingelesen.

Eine Detektion des jeweiligen Betriebsmodus bzw. eines jeweils aktiven Steuergeräts ist sowohl bei der ersten Variante A als auch bei der zweiten Variante B ähnlich zu einem induktiven Übertrager denkbar.

BEZUGSZEICHENLISTE

| | |
|---|---|
| 100 | Fahrzeug |
| 110 | Bremssystem |
| 120 | elektromagnetische Vorrichtung |
| 130 | Steuergerät |
| 140 | Stecker |
| 221 | Anker |
| 222 | Buchse |
| 223 | elektrisch leitfähiger Draht |
| 224 | erste Wicklungsanordnung |
| 225 | erster Eingangsanschluss |
| 226 | erster Ausgangsanschluss |
| 227 | zweite Wicklungsanordnung |
| 228 | zweiter Eingangsanschluss |
| 229 | zweiter Ausgangsanschluss |
| $I_1$ | erster elektrischer Strom |
| $I_2$ | zweiter elektrischer Strom |
| $U_1$ | erste elektrische Spannung |
| $U_2$ | zweiter elektrischer Spannung |
| 324 | dritte Wicklungsanordnung |
| 325 | dritter Eingangsanschluss |
| 326 | dritter Ausgangsanschluss |
| 327 | vierte Wicklungsanordnung |
| 328 | vierter Eingangsanschluss |
| 329 | vierter Ausgangsanschluss |
| 400 | Verfahren zum Betreiben |
| 405 | Schritt des Empfangens |
| 410 | Schritt des Anlegens |
| 420 | Schritt des Einlesens |
| 425 | Schritt des Auswertens |

**Patentansprüche**

1. Elektromagnetische Vorrichtung (120) für ein Bremssystem (110) für ein Fahrzeug (100), wobei die elektromagnetische Vorrichtung (120) folgende Merkmale aufweist:

   einen Anker (221) aus einem magnetisierbaren Material;
   eine Buchse (222), wobei der Anker (221) zumindest partiell innerhalb der Buchse (222) aufnehmbar ist;
   eine erste Wicklungsanordnung (224) mit mindestens einer Windung eines elektrischen Leiters (223) um die Buchse (222) herum und mit zwei ersten elektrischen Anschlüssen (225, 226); und
   eine zweite Wicklungsanordnung (227) mit mindestens einer Windung eines elektrischen Leiters (223) um die Buchse (222) herum und mit zwei zweiten elektrischen Anschlüssen (228, 229), wobei zwischen der ersten Wicklungsanordnung (224) und dem Anker (221) und zwischen der zweiten Wicklungsanordnung (227) und dem Anker (221) eine induktive Kopplung erzeugbar ist,
   **dadurch gekennzeichnet, dass** die erste Wicklungsanordnung (224) und die zweite Wicklungsanordnung (227) galvanisch voneinander getrennt sind, wobei die erste Wicklungsanordnung (224) und die zweite Wicklungsanordnung (227) jeweils elektrisch mit einem eigenen Steuergerät (130) verbunden sind.

2. Elektromagnetische Vorrichtung (120) gemäß Anspruch 1, **dadurch gekennzeichnet, dass** die Vorrichtung (120) als ein Aktor oder als ein Sensor für das Bremssystem (110) ausgeführt ist, und/oder wobei der Anker (221) relativ zu der Buchse (222) translatorisch beweglich zumindest partiell innerhalb der Buchse (222) aufnehmbar ist.

3. Elektromagnetische Vorrichtung (120) gemäß einem der vorangegangenen Ansprüche, **gekennzeichnet durch** eine dritte Wicklungsanordnung (324) mit mindestens einer Windung eines elektrischen Leiters (223) um die Buchse (222) herum und mit zwei dritten elektrischen Anschlüssen (325, 326) und durch eine vierte Wicklungsanordnung (327) mit mindestens einer Windung eines elektrischen Leiters (223) um die Buchse (222) herum und mit zwei vierten elektrischen Anschlüssen (328, 329), wobei die dritte Wicklungsanordnung (324) und die vierte Wicklungsanordnung (327) galvanisch voneinander und von der ersten Wicklungsanordnung (224) und der zweiten Wicklungsanordnung (227) getrennt sind, wobei zwischen der dritten Wicklungsanordnung (324) und dem Anker (221) und zwischen der vierten Wicklungsanordnung (327) und dem Anker (221) eine induktive Kopplung erzeugbar ist.

4. Elektromagnetische Vorrichtung (120) gemäß einem der vorangegangenen Ansprüche, **dadurch gekennzeichnet, dass** die Wicklungsanordnungen (224, 227; 324, 327) elektrisch parallel und/oder elektrisch in Reihe schaltbar oder geschaltet sind.

5. Elektromagnetische Vorrichtung (120) gemäß einem der vorangegangenen Ansprüche, **dadurch gekennzeichnet, dass** zumindest zwei Anschlüsse (225, 226, 228, 229; 325, 326, 328, 329) unterschiedlicher Wicklungsanordnungen (224, 227; 324, 327) elektrisch miteinander verbunden sind.

6. Elektromagnetische Vorrichtung (120) gemäß einem der vorangegangenen Ansprüche, **dadurch gekennzeichnet, dass** die elektrischen Anschlüsse (225, 226, 228, 229; 325, 326, 328, 329) ausgeformt sind, um durch zumindest einen Stecker (140) einzeln oder gemeinsam kontaktierbar zu sein.

7. Verfahren (400) zum Betreiben einer elektromagnetischen Vorrichtung (120) für ein Bremssystem (110) für ein Fahrzeug (100), wobei die elektromagnetische Vorrichtung (120) eine elektromagnetische Vorrichtung (120) gemäß einem der vorangegangenen Ansprüche ist, wobei das Verfahren (400) folgenden Schritt aufweist:

   Anlegen (410) eines elektrischen Betätigungssignals an elektrische Anschlüsse (225, 226, 228, 229; 325, 326, 328, 329) zumindest einer der Wicklungsanordnungen (224, 227; 324, 327), um den Anker (221) relativ zu der Buchse (222) translatorisch zu bewegen,
   oder
   Einlesen (420) eines elektrischen Erfassungssignals von elektrischen Anschlüssen (225, 226, 228, 229; 325, 326, 328, 329) zumindest einer der Wicklungsanordnungen (224, 227; 324, 327), um zu erfassen, ob eine translatorische Relativbewegung zwischen dem Anker (221) und der Buchse (222) oder eine Bewegung zwischen der Vorrichtung (120) und einem Objekt auftritt.

8. Verfahren (400) gemäß Anspruch 7, **dadurch gekennzeichnet, dass** im Schritt (410) des Anlegens das Betätigungssignal in einem ersten Betriebsmodus des Bremssystems (110) an elektrische Anschlüsse (225, 226; 228, 229) zumindest einer ersten der Wicklungsanordnungen (224; 227) und in einem zweiten Betriebsmodus des Bremssystems (110) an elektrische Anschlüsse (228, 229; 325, 326, 328, 329) zumindest einer zweiten der Wicklungsanordnungen (227; 324, 327) angelegt wird oder im Schritt (420) des Einlesens das Erfassungssignal in einem ersten Betriebsmodus des Bremssystems (110) von elektrischen Anschlüssen (225, 226; 228, 229) zumindest einer ersten der Wicklungsanordnungen (224; 227) und in einem zweiten Betriebsmodus des Bremssystems von elektrischen Anschlüssen (228, 229; 325, 326, 328, 329) zumindest einer zweiten der Wicklungsanordnungen (227; 324, 327) eingelesen wird.

9. Bremssystem (110) für ein Fahrzeug (100), wobei das Bremssystem (110) folgende Merkmale aufweist:

   zumindest eine elektromagnetische Vorrichtung (120) gemäß einem der Ansprüche 1 bis 6; und
   zwei Steuergeräte (130), die eingerichtet sind, um die Schritte des Verfahrens (400) gemäß einem der Ansprüche 7 bis 8 in entsprechenden Einheiten auszuführen und/oder anzusteuern, wobei die Steuergeräte (130) elektrisch mit Wicklungsanordnungen (224, 227; 324, 327) der zumindest einen elektromagnetischen Vorrichtung (120) verbunden sind.

10. Computerprogramm, mit Programmcode, der auf einem maschinenlesbaren Träger oder Speichermedium gespeichert ist und zur Durchführung, Umsetzung und/oder Ansteuerung der Schritte des Verfahrens gemäß einem der Ansprüche 7 bis 8 verwendet wird, wenn das Programm auf einem Computer oder einer Vorrichtung ausgeführt wird.

11. Maschinenlesbares Speichermedium, auf dem das Computerprogramm nach Anspruch 10 gespeichert ist.

**Claims**

1. Electromagnetic device (120) for a brake system (110) for a vehicle (100), wherein the electromagnetic device (120) has the following features:

   an armature (221) made of a magnetizable material;
   a bush (222), wherein the armature (221) can be at least partially received inside the bush (222);
   a first winding arrangement (224) having at least one winding of an electrical conductor (223) around the bush (222) and having two first electrical connections (225, 226); and
   a second winding arrangement (227) having at least one winding of an electrical conductor (223) around the bush (222) and having two second electrical connections (228, 229), wherein between the first winding arrangement (224) and the armature (221) and between the second winding arrangement (227) and the armature (221) an inductive coupling can be produced,
   **characterized in that** the first winding arrangement (224) and the second winding arrangement (227) are galvanically separated from each other, wherein the first winding arrangement (224) and the second winding arrangement (227) are in each case electrically connected to an individual control unit (130).

2. Electromagnetic device (120) according to claim 1, **characterized in that** the device (120) is in the form of an actuator or a sensor for the brake system (110), and/or wherein the armature (221) can be at least partially received inside the bush (222) so as to be able to be moved in translation relative to the bush (222).

3. Electromagnetic device (120) according to any one of the preceding claims, **characterized by** a third winding arrangement (324) having at least one winding of an electrical conductor (223) around the bush (222) and having two third electrical connections (325, 326) and by a fourth winding arrangement (327) having at least one winding of an electrical conductor (223) around the bush (222) and having two fourth electrical connections (328, 329), wherein the third winding arrangement (324) and the fourth winding arrangement (327) are galvanically separated from each other and from the first winding arrangement (224) and the second winding arrangement (227), wherein between the third winding arrangement (324) and the armature (221) and between the fourth winding arrangement (327) and the armature (221) an inductive coupling can be produced.

4. Electromagnetic device (120) according to any one of the preceding claims, **characterized in that** the winding arrangements (224, 227; 324, 327) can be connected or are connected electrically in parallel and/or electrically in series.

5. Electromagnetic device (120) according to any one of the preceding claims, **characterized in that** at least two connections (225, 226, 228, 229; 325, 326, 328, 329) of different winding arrangements (224, 227; 324, 327) are electrically connected to each other.

6. Electromagnetic device (120) according to any one of the preceding claims, **characterized in that** the electrical connections (225, 226, 228, 229; 325, 326, 328, 329) are formed to be able to be contacted individually or together by means of at least one plug (140).

7. Method (400) for operating an electromagnetic device (120) for a brake system (110) for a vehicle (100), wherein the electromagnetic device (120) has an electromagnetic device (120) according to any one of the preceding claims, wherein the method (400) has the following step:

applying (410) an electrical activation signal to electrical connections (225, 226, 228, 229; 325, 326, 328, 329) of at least one of the winding arrangements (224, 227; 324, 327) in order to move the armature (221) in translation relative to the bush (222),
or
reading (420) an electrical detection signal of electrical connections (225, 226, 228, 229; 325, 326, 328, 329) of at least one of the winding arrangements (224, 227; 324, 327) in order to detect whether a translational relative movement between the armature (221) and the bush (222) or a movement between the device (120) and an object occurs.

8. Method (400) according to claim 7, **characterized in that** in the step (410) of application the activation signal in a first operating mode of the brake system (110) is applied to electrical connections (225, 226; 228, 229) at least of a first of the winding arrangements (224; 227) and in a second operating mode of the brake system (110) is applied to electrical connections (228, 229; 325, 326, 328, 329) at least of a second of the winding arrangements (227; 324, 327) or in the step (420) of reading the detection signal in a first operating mode of the brake system (110) is read by electrical connections (225, 226; 228, 229) at least of a first of the winding arrangements (224; 227) and in a second operating mode of the brake system is read by electrical connections (228, 229; 325, 326, 328, 329) at least of a second of the winding arrangements (227; 324, 327).

9. Brake system (110) for a vehicle (100), wherein the brake system (110) has the following features:

at least one electromagnetic device (120) according to any one of claims 1 to 6; and
two control units (130) which are configured to carry out and/or control the steps of the method (400) according to any one of claims 7 to 8 in corresponding units, wherein the control units (130) are electrically connected to winding arrangements (224, 227; 324, 327) of the at least one electromagnetic device (120).

10. Computer program having program code which is stored on a machine-readable medium or storage medium and which is used to perform, implement and/or control the steps of the method according to either claims 7 to 8 when the program is carried out on a computer or a device.

11. Machine-readable storage medium on which the computer program according to claim 10 is stored.

**Revendications**

1. Dispositif électromagnétique (120) pour un système de freinage (110) pour un véhicule (100), dans lequel le dispositif électromagnétique (120) présente les caractéristiques suivantes :

un induit (221) en un matériau magnétisable ;
une douille (222), dans lequel l'induit (221) peut être logé au moins partiellement à l'intérieur de la douille (222) ;
un premier ensemble de bobine (224) avec au moins un enroulement d'un conducteur électrique (223) autour de la douille (222) et avec deux premiers raccords électriques (225, 226) ; et
un deuxième ensemble de bobine (227) avec au moins un enroulement d'un conducteur électrique (223) autour de la douille (222) et avec deux deuxièmes raccords électriques (228, 229), dans lequel un couplage inductif peut être généré entre le premier ensemble de bobine (224) et l'induit (221) et entre le deuxième ensemble de bobine (227) et l'induit (221),
**caractérisé en ce que** le premier ensemble de bobine (224) et le deuxième ensemble de bobine (227) sont séparés l'un de l'autre de manière galvanique, dans lequel le premier ensemble de bobine (224) et le deuxième ensemble de bobine (227) sont reliés respectivement électriquement à un propre appareil de commande (130).

2. Dispositif électromagnétique (120) selon la revendication 1, **caractérisé en ce que** le dispositif (120) est configuré comme un actionneur ou comme un capteur pour le système de freinage (110) et/ou dans lequel l'induit (221) peut être reçu par rapport à la douille (222) de manière mobile en translation au moins partiellement à l'intérieur de la douille (222).

3. Dispositif électromagnétique (120) selon l'une quelconque des revendications précédentes, **caractérisé par** un troisième ensemble de bobine (324) avec au moins un enroulement d'un conducteur électrique (223) autour de la douille (222) et avec deux troisièmes raccords électriques (325, 326) et par un quatrième ensemble de bobine (327) avec au moins un enroulement d'un conducteur électrique (223) autour de la douille (222) et avec deux quatrièmes raccords électriques (328, 329), dans lequel le troisième ensemble de bobine (324) et le quatrième ensemble de bobine (327) sont séparés de manière galvanique l'un de l'autre et du premier ensemble de bobine (224) et du deuxième ensemble de bobine (227), dans lequel un couplage inductif peut être généré entre le troisième ensemble de bobine (324) et l'induit (221) et entre le quatrième ensemble de bobine (327) et l'induit (221).

4. Dispositif électromagnétique (120) selon l'une quelconque des revendications précédentes, **caractérisé en ce que** les ensembles de bobine (224, 227 ; 324, 327) sont ou peuvent être montés électriquement en parallèle et/ou électriquement en série.

5. Dispositif électromagnétique (120) selon l'une quelconque des revendications précédentes, **caractérisé en ce qu'**au moins deux raccords (225, 226, 228, 229 ; 325, 326, 328, 329) de différents ensembles de bobine (224, 227 ; 324, 327) sont électriquement reliés l'un à l'autre.

6. Dispositif électromagnétique (120) selon l'une quelconque des revendications précédentes, **caractérisé en ce que** les raccords électriques (225, 226, 228, 229 ; 325, 326, 328, 329) sont formés afin de pouvoir être mis en contact individuellement ou ensemble avec au moins un connecteur (140).

7. Procédé (400) de fonctionnement d'un dispositif électromagnétique (120) pour un système de freinage (110) pour un véhicule (100), dans lequel le dispositif électromagnétique (120) est un dispositif électromagnétique (120) selon l'une quelconque des revendications précédentes, dans lequel le procédé (400) présente l'étape suivante :

l'application (410) d'un signal d'actionnement électrique aux raccords électriques (225, 226, 228, 229 ; 325, 326, 328, 329) au moins d'un des ensembles de bobine (224, 227 ; 324, 327) afin de déplacer en translation l'induit (221) par rapport à la douille (222),
ou
la lecture (420) d'un signal de détection électrique par des raccords électriques (225, 226, 228, 229 ; 325, 326, 328, 329) au moins d'un des ensembles de bobine (224, 227 ; 324, 327) afin de détecter si un mouvement relatif translatoire entre l'induit (221) et la douille (222) ou un mouvement entre le dispositif (120) et un objet survient.

8. Procédé (400) selon la revendication 7, **caractérisé en ce qu'**à l'étape (410) de l'application, le signal d'actionnement dans un premier mode de fonctionnement du système de freinage (110) est appliqué aux raccords électriques (225, 226 ; 228, 229) au moins d'un premier des ensembles de bobine (224 ; 227) et dans un second mode de fonctionnement du système de freinage (110) est appliqué aux raccords électriques (228, 229 ; 325, 326, 328, 329) au moins d'un deuxième des ensembles de bobine (227 ; 324, 327) ou à l'étape (420) de la lecture, le signal de détection dans un premier mode de fonctionnement du système de freinage (110) est lu par des raccords électriques (225, 226 ; 228, 229) au moins d'un premier des ensembles de bobine (224 ; 227) et dans un second mode de fonctionnement du système de freinage est lu par des raccords électriques (228, 229 ; 325, 326, 328, 329) au moins d'un deuxième des ensembles de bobine (227 ; 324, 327).

9. Système de freinage (110) pour un véhicule (100), dans lequel le système de freinage (110) présente les caractéristiques suivantes :

au moins un dispositif électromagnétique (120) selon l'une quelconque des revendications 1 à 6 ; et
deux appareils de commande (130) qui sont conçus afin de réaliser et/ou commander les étapes du procédé (400) selon l'une quelconque des revendications 7 à 8 dans des unités correspondantes, dans lequel les appareils de commande (130) sont électriquement reliés aux ensembles de bobine (224, 227 ; 324, 327) de l'au moins un dispositif électromagnétique (120).

10. Programme informatique avec un code de programme qui est enregistré sur un support ou support de stockage lisible par machine et est utilisé pour la réalisation, la mise en oeuvre et/ou la commande des étapes du procédé selon l'une quelconque des revendications 7 à 8 lorsque le programme est exécuté sur un ordinateur ou un dispositif.

11. Support de stockage lisible par machine, sur lequel le programme informatique selon la revendication 10 est stocké.

## Fig. 1

## Fig. 2

## Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6412613 B1
- US 20160265609 A1
- DE 102008058865 A1
- JP 2007157830 A
- JP 2014224571 A